# EUROPÄISCHE PATENTSCHRIFT

(11) **EP 1 929 357 B1**
(45) Veröffentlichungstag und Bekanntmachung des Hinweises auf die Patenterteilung: **09.03.2011**
(21) Anmeldenummer: 06792211.2
(22) Anmeldetag: 22.09.2006
(51) Int. Cl.: G02C 7/08, G02C 7/10

(54) **OPTISCHES BEOBACHTUNGSGERÄT UND VERFAHREN ZUM GESTEUERTEN EINSTELLEN EINER BRECHKRAFT EINES OPTISCHEN ELEMENTS IN EINEM OPTISCHEN BEOBACHTUNGSGERÄT**
OPTICAL OBSERVATION DEVICE AND METHOD FOR THE CONTROLLED SETTING OF A REFRACTIVE POWER OF AN OPTICAL ELEMENT IN AN OPTICAL OBSERVATION DEVICE
INSTRUMENT D'OBSERVATION OPTIQUE ET PROCEDE POUR REGLER, DE MANIERE COMMANDEE, UNE PUISSANCE D'UN ELEMENT OPTIQUE DANS UN INSTRUMENT D'OBSERVATION OPTIQUE

(30) Priorität: 29.09.2005 DE 102005048212
(43) Veröffentlichungstag der Anmeldung: 11.06.2008
(73) Patentinhaber: Carl Zeiss Vision GmbH, 73430 Aalen (DE)
(72) Erfinder: BAUMANN, Oliver, 73430 Aalen (DE); CABEZA GUILLÉN, Jesus, Miguel, 73434 Aalen (DE); CLAUSS, Michael, 73434 Aalen (DE); HAIDL, Markus, 73431 Aalen (DE); KELCH, Gerhard, 73431 Aalen (DE); KRATZER, Timo, 73434 Aalen (DE); KRUG, Herbert, 73433 Aalen (DE); SCHNITZER, Peter, 89522 Heidenheim (DE); WANG, Hexin, 89551 Koenigsbronn (DE)
(74) Vertreter: Witte, Weller & Partner
(86) Internationale Anmeldenummer: PCT/EP2006/009205
(87) Internationale Veröffentlichungsnummer: WO 2007/036327

(56) Entgegenhaltungen:
- WO-A1-03/007851
- WO-A2-02/065197
- WO-A2-2005/057252
- US-A- 4 300 818
- US-A- 5 182 585
- US-A- 5 712 721
- US-B1- 6 244 703
- US-B1- 6 491 394
- NIO Y K ET AL: "Spherical and irregular aberrations are important for the optimal performance of the human eye" OPHTHALMIC AND PHYSIOLOGICAL OPTICS 2002 UNITED KINGDOM, Bd. 22, Nr. 2, 2002, Seiten 103-112, XP002409818 ISSN: 0275-5408

## Beschreibung

Die Erfindung betrifft ein optisches Beobachtungsgerät aus der Gruppe: Brille, Leselupe, Fernglas mit einem in seiner Brechkraft gesteuert einstellbaren optischen Element, mit einem Sensor und mit einem Steuergerät zum Einstellen der Brechkraft in Abhängigkeit von Signalen des Sensors, wobei der Sensor ein Helligkeitssensor ist.

Die Erfindung betrifft ferner ein Verfahren zum gesteuerten Einstellen einer Brechkraft eines optischen Elements in einem optischen Beobachtungsgerät aus der Gruppe: Brille, Leselupe, Fernglas, bei dem mittels eines an dem Beobachtungsgerät angeordneten Sensors ein optischer Parameter erfasst und die Brechkraft in Abhängigkeit von einem Signal des Sensors eingestellt wird.

Ein Beobachtungsgerät sowie ein Verfahren der vorstehend genannten Art sind aus dem Dokument US 4 300 818 A bekannt.

Zur dynamischen Korrektur von Sehfehlern ist es bekannt, Brillen mit Brillengläsern einzusetzen, die in ihrer Brechkraft elektronisch einstellbar sind. In dem Dokument DE 102 58 729 A1 ist eine selbstfokussierende Brille beschrieben, bei der am Brillengestell ein Sensor angeordnet ist, der die Brechkraft mindestens eines Auges direkt misst. Das Ausgangssignal des Sensors wird einem Steuergerät zugeleitet, das die Brechkraft des dem gemessenen Auge zugehörigen Brillenglases entsprechend nachstellt. Auf diese Weise können auch Personen mit eingeschränkter Akkommodationsfähigkeit über einen weiten Entfernungsbereich hinweg scharf sehen.

Aus dem eingangs genannten Dokument US 4 300 818 A ist eine selbstfokussierende Brille bekannt. Bei dieser Brille sind auf der rückwärtigen Seite des Nasenbügels zwei Lichtquellen sowie zwei Lichtempfänger angeordnet, und zwar in einer für den jeweiligen Benutzer individuellen Positionierung. Die Lichtquellen senden jeweils einen Lichtstrahl aus, der infolge der Positionierung der Lichtquellen auf die (helle) Sklera des rechten bzw. auf die (dunkle) Cornea des linken Auges gerichtet ist, wenn der Benutzer ein Objekt in der Ferne fixiert. Die Lichtempfänger fangen die reflektierten Strahlen auf. Wenn der Benutzer das Objekt nun in der Nähe fixiert, dann ergibt sich der so genannte Konvergenzwinkel, d.h. die Achsen der beiden Augen, die bei einem weit entfernten Objekt parallel verlaufen, schneiden sich unter einem mit der Nähe des Objektes zunehmenden Winkel. Damit geht einher, dass die von den Lichtquellen ausgesandten Lichtstrahlen nicht mehr auf die ursprünglich angeleuchteten hellen bzw. dunklen Bereiche des Auges treffen, sondern auf Bereiche entgegengesetzten Reflexionsvermögens. Daraus wird der Konvergenzwinkel bestimmt, und die in ihrer Brechkraft einstellbaren Brillengläser werden nachgestellt.

Eine ähnliche Anordnung ist auch in dem Dokument US 6,491,394 B1 beschrieben. Mit der dort offenbarten elektronisch geregelten Brille werden ebenfalls Sehfehler des Brillenträgers dynamisch korrigiert. Dazu zählen Fehler niedrigerer Ordnung (Kurzsichtigkeit, Weitsichtigkeit, Astigmatismus), aber auch Sehfehler höherer Ordnung (Aberrationen und weitere Sehfehler höherer Ordnung). Bei dieser bekannten Brille ist auch vorgesehen, die Brillengläser ggf. bereichsweise in ihrer Brechkraft einzustellen.

Bei Sehfehlern höherer Ordnung spielen unterschiedliche Einflussgrößen eine Rolle. So hat man festgestellt, dass die Beleuchtungsstärke, d.h. die Helligkeit des in das optische Beobachtungsgerät und damit in die Augen des Benutzers einfallenden Lichts, eine wesentliche Rolle spielt. Die Pupillen des Benutzers adaptieren nämlich in Abhängigkeit von der Beleuchtungsstärke, indem die Pupillen in bekannter Weise im Hellen kleiner und im Dunklen größer sind. Diese Änderung des Pupillendurchmessers wirkt sich merklich auf die Fehlsichtigkeit höherer Ordnung aus.

Einerseits ändert sich mit der Pupillengröße die Fehlsichtigkeit zweiter Ordnung (Defokus und Astigmatismus). Die Hornhaut besitzt nämlich keine sphärische, sondern nur eine näherungsweise torische Oberfläche. Für unterschiedliche Pupillendurchmesser ist daher die benutzte Hornhautoberfläche anders. Das ergibt für irreguläre Hornhautoberflächen eine Änderung der effektiven Hauptkrümmung der Hornhaut. Dies ändert die totale Brechkraft des Auges. Bei manchen Menschen ist demzufolge die Brechkraft ihrer Augen nachts höher.

Andererseits ändert sich mit der Pupillengröße auch die Fehlsichtigkeit höherer Ordnung. Auch wenn die Hornhaut eine ideale sphärische Oberfläche besäße, würde eine Änderung des Pupillendurchmessers eine Änderung der sphärischen Aberration des Auges bedingen. Ferner spielt auch hier die irreguläre Hornhautoberfläche eine Rolle. Für verschiedene Pupillendurchmesser ist auch die Wirkung der Unregelmäßigkeiten anders. Dies ergibt eine Änderung der Aberrationen höherer Ordnung.

Das Dokument US 5 712 721 A beschreibt eine Linse, die in ihrer Brechkraft elektrisch einstellbar ist. Hintergrund der beschriebenen Linse ist die Tatsache, dass herkömmliche bifokale Linsen zwei räumlich getrennte Bereiche für Nahsehen und Fernsehen aufweisen. Wenn nun ein Träger einer solchen Linse bei Nacht Auto fährt, und es kommt ihm ein Fahrzeug mit Licht entgegen, dann wird dieses Licht in den beiden Bereichen unterschiedlich gebrochen, und der Fahrer nimmt ein verschwommenes Bild wahr, was gefährlich ist, weil er die Straße nicht mehr richtig erkennen kann. Die beschriebene Linse soll nun so beschaffen sein, dass der Benutzer die Schärfe bereichsweise umschalten kann. Der Fahrer soll damit in die Lage versetzt werden bei nächtlichem Gegenverkehr den Nahbereich der Linse in einen Fernbereich umzuschalten, so dass das gesamte Gesichtsfeld in einem homogenen Fernbereich liegt. Die beschriebene Linse soll elektrisch einstellbar und im Auge oder unmittelbar auf dem Auge angeordnet sein, jedenfalls hinter dem Augenlid. Auf der Linse ist eine Photodiode angeordnet, deren Ausgangssignal verwendet wird, um die Linse in der genannten Weise umzuschalten. Der Benutzer muss dazu nur das Augenlid für eine gewisse Zeit (die länger als ein natürlicher Blinzelvorgang ist) schließen, dann erkennt die Photodiode einen Abfall der Intensität des in das Auge einfallenden Umgebungslichts für eine vorbestimmte Zeitdauer und bewirkt den Umschaltvorgang.

Das Dokument WO 03/007851 A1 beschreibt eine Sehprothese, bei der eine Linse kontinuierlich in ihrer Brechkraft verstellt wird, und zwar in Abhängigkeit von einem Signal eines Entfernungsmessers. Die Linse kann bei einem Ausführungsbeispiel ein Brillenglas sein, und der Entfernungsmesser befindet sich dann am Brillengestell. Bei einem anderen Ausführungsbeispiel ist die Linse eine intraokulare Linse. Für die Entfernungsmessung werden dann Signale verwendet, die der Kontraktion bestimmter Augenmuskeln entsprechen. Bei einer Variante dieses Ausführungsbeispiels soll die Linse einen Photodetektor aufweisen, der das in das Auge einfallende Licht erfasst. Wenn der Benutzer der Linse ein nahes Objekt anvisiert, dann soll die Kontraktion der zum Scharfstellen benutzten Augenmuskeln auch eine Kontraktion der Iris bewirken, so dass weniger Licht auf den Photodetektor fällt und dessen Ausgangssignal folglich zum Ändern der Brechkraft der Linse verwendet werden kann.

Der Erfindung liegt daher die Aufgabe zugrunde, ein optisches Beobachtungsgerät, insbesondere Brille, sowie ein Verfahren der eingangs genannten Art dahingehend weiterzubilden, dass die vorstehend genannten Nachteile vermieden werden. Insbesondere soll es erfindungsgemäß möglich werden, die Korrektur von Sehfehlern zweiter und höherer Ordnung dadurch zu vervollkommnen, dass zusätzliche Einflussgrößen berücksichtigt werden.

Bei einem optischen Beobachtungsgerät der eingangs genannten Art wird diese Aufgabe erfindungsgemäß dadurch gelöst, dass der Helligkeitssensor die Beleuchtungsstärke des in die Augen des Benutzers des optischen Geräts einfallenden Umgebungslichts misst, dass Mittel zum Messen der Brechkraft mindestens eines Auges eines Benutzers des optischen Beobachtungsgeräts vorgesehen sind, dass Ausgangssignale der Mittel dem Steuergerät zugeleitet werden und dass die Signale des Sensors den Ausgangssignalen der Mittel überlagert werden.

Bei einem Verfahren der eingangs genannten Art wird diese Aufgabe erfindungsgemäß dadurch gelöst, dass mittels des Sensors die Beleuchtungsstärke des in das optische Gerät einfallenden Lichts erfasst wird, dass die Brechkraft mindestens eines Auges eines Benutzers des optischen Beobachtungsgeräts gemessen und daraus ein Ausgangssignal zum Einstellen der Brechkraft des optischen Elements abgeleitet wird, und dass dem Ausgangssignal das Signal des Sensors überlagert wird.

Die der Erfindung zugrunde liegende Aufgabe wird auf diese Weise vollkommen gelöst.

Dadurch, dass die Beleuchtungsstärke des Umgebungslichts berücksichtigt wird, können die eingangs bereits erläuterten Effekte hinsichtlich der Fehlsichtigkeit zweiter und höherer Ordnung, nämlich der Einfluss des sich ändernden Pupillendurchmessers in Verbindung mit der nicht-sphärischen Form der Hornhaut, merklich kompensiert werden. Die Erfindung hat ferner den Vorteil, dass die Einstellung der Brechkraft des optischen Elements, beispielsweise des Brillenglases, als überlagerte Steuerung ausgestaltet ist, bei der die Grundsteuerung über eine Messung der Brechkraft mindestens eines Auges des Benutzers stattfindet und die Beleuchtungsstärke als Korrekturgröße dient.

Aus den Dokumenten EP 0 341 519 A2 und FR 2 530 039 A1 sind zwar Brillen mit integriertem Helligkeitssensor bekannt, diese Sensoren steuern jedoch die Durchlässigkeit der Brillengläser, um auf diese Weise eine elektronische Sonnenbrille bzw. Arbeits-Schutzbrille zu realisieren.

Nach einer ersten Variante des erfindungsgemäßen Beobachtungsgeräts wird die Beleuchtungsstärke direkt erfasst.

Diese Maßnahme hat den Vorteil, dass auf einfache und bewährte Helligkeitssensoren, beispielsweise Photodioden, zurückgegriffen werden kann.

Bei einer zweiten Variante hingegen wird die Beleuchtungsstärke indirekt erfasst, vorzugsweise dadurch, dass der Durchmesser einer Pupille eines Auges eines Benutzers des Beobachtungsgeräts gemessen wird.

Diese Maßnahme hat den Vorteil, dass zusätzlich das Verhalten der Iris bei sich ändernder Umgebungshelligkeit berücksichtigt wird.

Bei einer bevorzugten Ausführungsform der Erfindung ist das optische Element bereichsweise in seiner Brechkraft einstellbar.

Diese Maßnahme hat zum einen den Vorteil, dass die Korrektur von Sehfehlern höherer Ordnung besonders effektiv möglich ist, weil durch unterschiedliche Einstellung der verschiedenen Bereiche, z.B. eines Brillenglases, nahezu beliebige asphärische Formen erzeugt werden können. Andererseits kann man auch eine Anpassung an die Gebrauchsbedingungen vornehmen, indem beispielsweise der untere Bereich eines Brillenglases für den Nahbereich und der obere Bereich für einen Fernbereich optimiert, oder die Blickrichtung des Benutzers berücksichtigt wird.

Die Mittel zum Messen der Brechkraft des mindestens einen Auges können derart ausgelegt sein, dass sie im oben beschriebenen Sinn den Durchmesser einer Pupille mindestens eines Auges des Benutzers des optischen Beobachtungsgeräts messen.

Die Einstellung der Brechkraft kann alternativ nur in kleinen Bereichen erfolgen, wie dies für eine bestimmte Person ausreichend ist. Darüber hinaus ist aber auch eine Einstellbarkeit über einen weiten Bereich möglich, damit das optische Beobachtungsgerät auch von mehreren Personen benutzt werden kann.

Bei einer ersten Gruppe von Ausführungsbeispielen dazu kann die Linse elektrisch einstellbar sein, beispielsweise mittels elektrischer, magnetischer oder elektromagnetischer Wechselfelder oder mittels elektrischer, magnetischer oder elektromagnetischer quasi-statischer Felder.

Bei einer zweiten Gruppe von Ausführungsbeispielen hingegen kann die Linse mittels mechanischer, hydraulischer oder pneumatischer Krafteinwirkung einstellbar sein.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Figur 1:: eine äußerst schematisierte perspektivische Darstellung eines Ausfüh- rungsbeispiels eines erfindungsgemäßen optischen Beobachtungsgeräts in Gestalt einer Brille; und
- Figur 2:: ein Blockschaltbild zur Erläuterung der Wirkungsweise der Brille gemäß Figur 1.

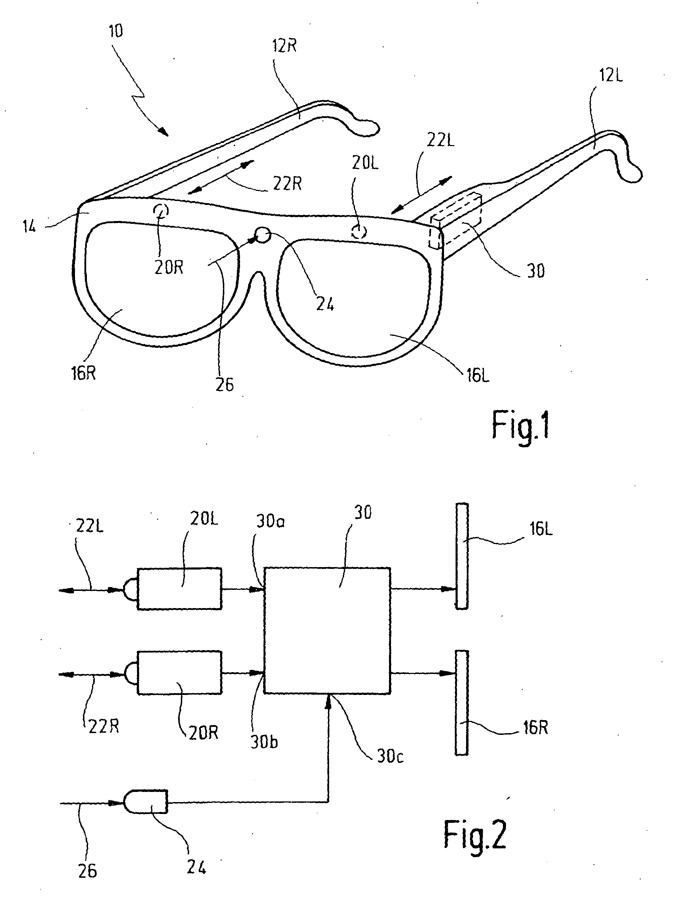

In Figur 1 bezeichnet 10 als Ganzes eine Brille, die hier beispielhaft für ein optisches Beobachtungsgerät steht, das auch eine Sehhilfe, eine Lupe, ein Fernglas, ein Fernrohr usw. sein kann, d.h. ein gerät, das von einer Person benutzt wird, die mit ihren Augen und mittels optischer Hilfsmittel ein Objekt betrachtet.

Die Brille 10 ist mit seitlichen Bügeln 12R und 12L versehen, die von einer vorderen Fassung 14 zusammengehalten werden. Die Fassung 14 hält Brillengläser oder Linsen 16R und 16L. Mindestens eines der Brillengläser 16R und 16L ist in seiner Brechkraft gesteuert einstellbar und zwar entweder gesamthaft oder bereichsweise, wie dies an sich bekannt ist.

Die Brillengläser 16R und 16L können zu diesem. Zweck mit Kristallflüssigkeiten aufgebaut sein, beispielsweise als als pixeliertes SLM (Spatial Light Modulator) oder als eine durch ein Feld kontrollierte fokussierbare Linse. Das Feld kann elektrisch, magnetisch oder elektromagnetisch sein. Es kann sich dabei um ein Wechselfeld oder um ein quasi-statisches Feld handeln. Die Steuerung kann aber auch mechanisch, hydraulisch oder pneumatisch ausgelegt sein.

Auf der Rückseite der Fassung 14, d.h. zu den (nicht dargestellten) Augen des Benutzers der Brille 10 hin gerichtet, sind oberhalb der Brillengläser 16R und 16L Sende- und Empfangsmodule 20R und 20L angeordnet. Diese dienen zum vorzugsweise direkten Messen der Brechkraft der Augen des Benutzers, wie dies im Einzelnen z.B. in der DE 102 58 729 A1 beschrieben ist. Die entsprechenden Lichtstrahlen, also das in die Augen eingestrahlte Messlicht sowie das von den Augen reflektierte Licht, sind bei 22R und 22L angedeutet.

Auf der Vorderseite des Rahmens 14, vorzugsweise in dessen Mitte, ist ein Helligkeitssensor 24 angeordnet. Der Helligkeitssensor 24 misst die Beleuchtungsstärke des in die Augen des Benutzers einfallenden Umgebungslichts, das mit einem Pfeil 26 angedeutet ist. Es versteht sich dabei, dass auch mehrere Helligkeitssensoren vorgesehen sein können, beispielsweise einer für jedes Auge.

Alternativ zu dieser direkten Messung kann die Helligkeit auch indirekt gemessen werden, beispielsweise dadurch dass der Durchmesser der Pupille mindestens eines Auges des Benutzers gemessen wird. Diese Funktion kann in die Sende- und Empfangsmodule 20R, 20L integriert sein.

Die Sende- und Empfangsmodule 20R, 20L sowie der Helligkeitssensor 24 sind an ein Steuergerät 30 angeschlossen, das in dargestellten Beispiel in den linken Bügel 12L integriert ist.

Figur 2 zeigt als Blockschaltbild die Verschaltung der vorstehend genannten Elemente. Die Sende- und Empfangsmodule 20R, 20L sind an Eingänge 30a und 30b des Steuergeräts 30 angeschlossen. Das Steuergerät 30 bildet aus den Signalen der Sende- und Empfangsmodule 20L und 20R Steuersignale zum Einstellen der Brechkraft der Brillengläser 16R und 16L. Dieser Steuerung wird das Signal des Helligkeitssensors 24 überlagert, der an einen weiteren Eingang 30c des Steuergeräts 30 angeschlossen ist.

Die Brille 10 kann in einer einfacheren Ausführungsform außerhalb des Rahmens der vorliegenden Erfindung nur mit dem Helligkeitssensor 24 versehen sein, also ohne Elemente zum Bestimmen der Brechkraft der Augen des Benutzers. Dann würde die Brechkraft der Brillengläser nur in Abhängigkeit von den Umgebungsbedingungen Hell/Dunkel verstellt, ohne Rücksicht auf einen individuellen Sehfehler des Benutzers.

In diesem Falle kann der Einstellbereich mit weiten Grenzen vorgesehen werden, damit die Brille, oder ein entsprechendes anderes optisches Beobachtungsgerät, von mehreren Personen benutzt werden kann (Familienbrille).

## Patentansprüche

1. Optisches Beobachtungsgerät aus der Gruppe: Brille, Leselupe, Fernglas mit einem in seiner Brechkraft gesteuert einstellbaren optischen Element, mit einem Sensor (24) und mit einem Steuergerät (30) zum Einstellen der Brechkraft in Abhängigkeit von Signalen des Sensors (24), wobei der Sensor (24) ein Helligkeitssensor ist, **dadurch gekennzeichnet, dass** der Helligkeitssensor (24) die Beleuchtungsstärke des in die Augen des Benutzers des optischen Geräts einfallenden Umgebungslichts (26) misst, dass Mittel (20R, 20L, 22R, 22L) zum Messen der Brechkraft mindestens eines Auges des Benutzers des optischen Beobachtungsgeräts vorgesehen sind, dass Ausgangssignale der Mittel (20R, 20L, 22R, 22L) dem Steuergerät (30) zugeleitet werden und dass die Signale des Sensors (24) den Ausgangssignalen der Mittel (20R, 20L, 22R, 22L) überlagert werden.

2. Optisches Beobachtungsgerät nach Anspruch 1, **dadurch gekennzeichnet, dass** der Helligkeitssensor die Beleuchtungsstärke direkt erfasst.

3. Optisches Beobachtungsgerät nach Anspruch 1, **dadurch gekennzeichnet, dass** der Helligkeitssensor die Beleuchtungsstärke indirekt erfasst.

4. Optisches Beobachtungsgerät nach Anspruch 3, **dadurch gekennzeichnet, dass** der Helligkeitssensor die Beleuchtungsstärke über eine Messung des Durchmessers einer Pupille mindestens eines Auges des Benutzers des optischen Beobachtungsgeräts (10) erfasst.

5. Optisches Beobachtungsgerät nach einem oder mehreren der Ansprüche 1 bis 4, **dadurch gekennzeichnet, dass** das optische Element bereichsweise in seiner Brechkraft einstellbar ist.

6. Optisches Beobachtungsgerät nach einem oder mehreren der Ansprüche 1 bis 5, **dadurch gekennzeichnet, dass** die Mittel zum Messen der Brechkraft zugleich den Durchmesser mindestens einer Pupille eines Auges des Benutzers des optischen Beobachtungsgeräts (10) erfassen.

7. Optisches Beobachtungsgerät nach einem oder mehreren der Ansprüche 1 bis 6, **dadurch gekennzeichnet, dass** die Linse (16R, 16L) elektrisch einstellbar ist.

8. Optisches Beobachtungsgerät nach Anspruch 7, **dadurch gekennzeichnet, dass** die Linse mittels elektrischer, magnetischer oder elektromagnetischer Wechselfelder einstellbar ist.

9. Optisches Beobachtungsgerät nach Anspruch 7, **dadurch gekennzeichnet, dass** die Linse mittels elektrischer, magnetischer oder elektromagnetischer quasi-statischer Felder einstellbar ist.

10. Optisches Beobachtungsgerät nach einem oder mehreren der Ansprüche 1 bis 6, **dadurch gekennzeichnet, dass** die Linse mittels mechanischer, hydraulischer oder pneumatischer Krafteinwirkung einstellbar ist.

11. Verfahren zum gesteuerten Einstellen einer Brechkraft eines optischen Elements in einem optischen Beobachtungsgerät aus der Gruppe: Brille, Leselupe, Fernglas, bei dem mittels eines an dem Beobachtungsgerät angeordneten Sensors (24) ein optischer Parameter erfasst und die Brechkraft in Abhängigkeit von Signalen des Sensors (24) eingestellt wird, **dadurch gekennzeichnet, dass** mittels des Sensors (24) die Beleuchtungsstärke des in die Augen des Benutzers des optischen Geräts einfallenden Umgebungslichts (26) erfasst wird, dass die Brechkraft mindestens eines Auges des Benutzers des optischen Beobachtungsgeräts gemessen und daraus ein Ausgangssignal zum Einstellen der Brechkraft des optischen Elements abgeleitet wird, und dass dem Ausgangssignal das Signal des Sensors (24) überlagert wird.

12. Verfahren nach Anspruch 11, **dadurch gekennzeichnet, dass** die Beleuchtungsstärke direkt erfasst wird.

13. Verfahren nach Anspruch 12, **dadurch gekennzeichnet, dass** die Beleuchtungsstärke indirekt erfasst wird.

14. Verfahren nach Anspruch 13, **dadurch gekennzeichnet, dass** die Beleuchtungsstärke über eine Messung des Durchmessers mindestens einer Pupille eines Auges eines Benutzers des optischen Beobachtungsgeräts (10) erfasst wird.

## Claims

1. An optical observation instrument from a group comprising: spectacle, reading lens, telescope, comprising an optical element adapted to be controllably adjustable in its refractive power, a sensor (24), and a control unit (30) for adjusting the refractive power as a function of signals from the sensor (24), wherein the sensor (24) is a brightness sensor, **characterized in that** the brightness sensor (24) measures the illuminance of the ambient light (26) impinging on the eyes of the user of the optical instrument, that means (20R, 20L, 22R, 22L) are provided for measuring the refractive power of at least one eye of the user of the optical observation instrument, that output signals from the means (20R, 20L, 22R, 22L) are fed to the control unit (30), and that the signals from the sensor (24) are superimposed on the output signals from the means (20R, 20L, 22R, 22L).

2. The optical observation instrument of claim 1, **characterized in that** the brightness sensor captures the illuminance directly.

3. The optical observation instrument of claim 1, **characterized in that** the brightness sensor captures the illuminance indirectly.

4. The optical observation instrument of claim 3, **characterized in that** the brightness sensor captures the illuminance via a measurement of the diameter of a pupil of at least one eye of a user of the optical observation instrument (10).

5. The optical observation instrument of one or more of claims 1 to 4, **characterized in that** the optical element is adapted to be adjusted in its refractive power in selected areas thereof.

6. The optical observation instrument of claims one or more of 1 to 5, **characterized in that** the means for measuring the refractive power simultaneously capture the diameter of the at least one pupil of at least one eye of the user of the optical observation instrument (10).

7. The optical observation instrument of one or more of claims 1 to 6, **characterized in that** the lens (16R, 16L) is adapted to be adjusted electrically.

8. The optical observation instrument of claim 7, **characterized in that** the lens is adapted to be adjusted by means of alternating electrical, magnetic or electromagnetic fields.

9. The optical observation instrument of claim 7, **characterized in that** the lens is adapted to be adjusted by means of electrical, magnetic or electromagnetic quasi-static fields.

10. The optical observation instrument of one or more of claims 1 to 6, **characterized in that** the lens is adapted to be adjusted by means of mechanical, hydraulic or pneumatic power action.

11. A method of controllably adjusting a refractive power of an optical element in an optical observation instrument from a group comprising: spectacle, reading lens, telescope, in which by means of a sensor (24) positioned at the observation instrument an optical parameter is captured and the refractive power is adjusted as a function of signals from the sensor (24), **characterized in that** by means of the sensor (24) the illuminance of the ambient light (26) impinging on the eyes of the user of the optical instrument is captured, that the refractive power of at least one eye of a user of the optical observation instrument (10) is measured and an output signal for adjusting the refractive power of the optical element is derived therefrom, and that the signal from the sensor (24) is superimposed on the output signal.

12. The method of claim 11, **characterized in that** the illuminance is captured directly.

13. The method of claim 12, **characterized in that** the illuminance is captured indirectly.

14. The method of claim 13, **characterized in that** the illuminance is captured via a measurement of the diameter of at least one pupil of an eye of a user of the optical observation instrument (10).

## Revendications

1. Appareil d'observation optique du groupe lunette, loupe de lecture, jumelles, avec un élément optique réglable de manière contrôlée dans son pouvoir réfringent, avec un détecteur (24) et avec un appareil de commande (30) pour le réglage du pouvoir réfringent en fonction des signaux du détecteur (24), sachant que le détecteur (24) est un détecteur de luminosité, **caractérisé en ce que** le détecteur de luminosité (24) mesure l'intensité lumineuse de la lumière environnante (26) tombant dans les yeux de l'utilisateur de l'appareil d'observation, **en ce que** des moyens (20R, 20L, 22R, 22L) sont prévus pour mesurer le pouvoir réfringent d'au moins un oeil de l'utilisateur de l'appareil d'observation optique, **en ce que** les signaux de sortie des moyens (20R, 20L, 22R, 22L) sont acheminés à l'appareil de commande (30), et **en ce que** les signaux du détecteur (24) sont superposés aux signaux de sortie des moyens (20R, 20L, 22R, 22L).

2. Appareil d'observation optique selon la revendication 1, **caractérisé en ce que** le détecteur de luminosité détermine l'intensité lumineuse par voie directe.

3. Appareil d'observation optique selon la revendication 1, **caractérisé en ce que** le détecteur de luminosité détermine l'intensité lumineuse par voie indirecte.

4. Appareil d'observation optique selon la revendication 3, **caractérisé en ce que** le détecteur de luminosité détermine l'intensité lumineuse par voie indirecte à l'aide d'une mesure du diamètre d'une pupille d'au moins un oeil de l'utilisateur de l'appareil d'observation (10).

5. Appareil d'observation optique selon l'une quelconque des revendications 1 à 4, **caractérisé en ce que** le pouvoir réfringent de l'élément optique est réglage par zones.

6. Appareil d'observation optique selon l'une quelconque des revendications 1 à 5, **caractérisé en ce que** les moyens pour la mesure du pouvoir réfringent déterminent simultanément le diamètre d'au moins une pupille d'un oeil de l'utilisateur de l'appareil d'observation optique (10).

7. Appareil d'observation optique selon l'une quelconque des revendications 1 à 6, **caractérisé en ce que** la lentille (16R, 16L) est réglable par voie électrique.

8. Appareil d'observation optique selon la revendication 7, **caractérisé en ce que** la lentille est réglable à l'aide de champs alternatifs électriques, magnétiques ou électromagnétiques.

9. Appareil d'observation optique selon la revendication 7, **caractérisé en ce que** la lentille est réglable à l'aide de champs électriques, magnétiques ou électromagnétiques quasi-statiques.

10. Appareil d'observation optique selon l'une quelconque des revendications 1 à 6, **caractérisé en ce que** la lentille est réglable à l'aide de l'action d'une force d'origine mécanique, hydraulique ou pneumatique.

11. Procédé pour le réglage commandé du pouvoir réfringent d'un élément optique dans un appareil d'observation optique du groupe : lunette, loupe de lecture, jumelles, dans le cas duquel l'on détermine, à l'aide d'un détecteur (24) disposé sur l'appareil d'observation optique, un paramètre optique, et que l'on règle le pouvoir réfringent en fonction des signaux du détecteur (24), **caractérisé en ce que** l'on détermine à l'aide du détecteur (24) l'intensité lumineuse de la lumière environnante (26) tombant dans les yeux de l'utilisateur de l'appareil d'observation optique, **en ce que** l'on mesure le pouvoir réfringent d'au moins un oeil de l'utilisateur de l'appareil d'observation optique et **en ce que** l'on en dérive un signal de sortie pour le réglage du pouvoir réfringent de l'élément optique, et **en ce que** le signal du détecteur (24) est superposé au signal de sortie.

12. Procédé selon la revendication 11, **caractérisé en ce que** l'intensité lumineuse est déterminée par voie directe.

13. Procédé selon la revendication 12, **caractérisé en ce que** l'intensité lumineuse est déterminée par voie indirecte.

14. Procédé selon la revendication 13, **caractérisé en ce que** l'intensité lumineuse est déterminée à l'aide d'une mesure du diamètre d'au moins une pupille d'un oeil de l'utilisateur de l'appareil d'observation optique (10).
